# EUROPEAN PATENT SPECIFICATION

(11) **EP 2 379 944 B1**
(45) Date of publication and mention of the grant of the patent: **07.08.2019**
(21) Application number: 09833087.1
(22) Date of filing: 06.02.2009
(51) Int. Cl.: F23K 5/18, F23R 3/28, F23D 11/38, F23D 17/00, F02C 9/40

(54) **METHOD FOR SUPPLYING A GAS TURBINE PLANT AND GAS TURBINE PLANT**
VERFAHREN ZUR VERSORGUNG EINER GASTURBINENANLAGE UND GASTURBINENANLAGE
PROCEDE DE FOURNITURE D'UNE INSTALLATION DE TURBINE A GAZ ET INSTALLATION DE TURBINE A GAZ

(30) Priority: 19.12.2008 IT MI20082263
(43) Date of publication of application: 26.10.2011
(73) Proprietor: Ansaldo Energia S.p.A., Genova (IT)
(72) Inventor: GATTI, Roberta, 16131 Genova (IT); FERRARI, Fabrizio, 16013 Campo Ligure (IT); MINERVINI, Luigi, 16122 Genova (IT); PESCE, Paolo, 16152 Genova (IT); BONZANI, Federico, 16156 Genova (IT); PASTORINO, Pierpaolo, 16125 Genova (IT); OLIVERI, Marco, 16013 Campo Ligure (IT)
(74) Representative: Bernotti, Andrea
(86) International application number: PCT/IT2009/000039
(87) International publication number: WO 2010/070692

(56) References cited:
- EP-A2- 0 952 317
- WO-A1-94/29647
- WO-A2-2008/125907
- DE-A1-102007 015 311
- US-A- 4 110 973
- US-A- 6 145 294

## Description

### TECHNICAL FIELD

The present invention relates to a method for supplying a gas turbine plant and to a gas turbine plant. Specifically, the present invention relates to a method and a device for cleaning diesel oil nozzles of a burner of a combustion chamber in a gas turbine plant for the production of electricity.

### BACKGROUND ART

A known type of gas turbine comprises a combustion chamber which can be selectively supplied either with a primary fuel, generally gas, or with a secondary fuel, generally diesel oil. Specifically, the plant comprises a gas supply circuit and a diesel oil supply circuit of the combustion chamber.

The diesel oil supply circuit normally comprises a diffusion supply line and a premix supply line.

The combustion chamber is provided with a plurality of burners, each of which comprises gas nozzles, a plurality of premix diesel oil nozzles and a diffusion diesel oil nozzle.

Normally, the plant runs in gas operating mode, and especially in particular cases, e.g. in cases of emergency, in which there is no gas, the plant runs in a diesel oil operating mode.

Specifically, the diesel oil operating mode contemplates the initial activation of the diffusion diesel oil supply line only, and only later the activation of the premix diesel oil supply line.

The diesel oil supply circuit thus often remains unused, and when it is activated it must guarantee perfect operation, because in most cases it is activated in emergency situations.

In order to maintain the diesel oil supply line fully efficient, the diffusion and premix diesel oil nozzles must be cleaned before and after each use of the turbine in diesel oil operating mode. Indeed, when diesel oil supply ends the possible residues in the burners may give rise to the formation of solid carbonous deposits (cracking or coking), given the high temperatures. In particular, premix diesel oil nozzles, which are very small, are easily obstructed and subsequent restoring of the diesel oil operating mode may be inefficient or even impossible.

The diesel oil nozzles may be cleaned in different known manners. For example, after suspending the supplying of diesel oil, pressurized water is supplied along the diesel oil supply line (specifically, the premix line) which removes possible residues from the nozzle.

The problem of the formation of deposits is not however solved in an entirely satisfactory manner. After ending the cleaning, indeed, the diesel oil nozzles remain exposed to the high temperatures of the combustion chamber. When the diesel oil operation is restored, the diesel oil flow comes into contact with the initially very hot portions of the burners. The injected diesel oil then operates as a refrigerating fluid and lowers the temperature of the nozzles. However, when starting diesel oil operating mode, temperatures are high enough to cause immediate cracking or coking.

WO 2008/125907 A2 discloses a gas turbine with dual-fuel capability that can switch between gas fuel and liquid fuel. Switch to liquid fuel may begin with a water flush. After a prescribed time, the liquid fueling begins and the gaseous fueling is shut down.

### DISCLOSURE OF INVENTION

It is the object of the present to provide a method for supplying a gas turbine plant and a gas turbine plant which are free from the described drawbacks.

In accordance with such objects, the present invention relates to a method for supplying a gas turbine and a gas turbine plant as claimed in claims 1 and 14 respectively.

### BRIEF DESCRIPTION OF THE DRAWINGS

The present invention will now be described with reference to the accompanying drawings, which illustrate some non-limitative embodiments thereof, in which:
- figure 1 is a schematic representation with parts removed for clarity of a gas turbine plant for the production of electricity, comprising a device for cleaning diesel oil nozzles in accordance with an embodiment of the present invention;
- figure 2 is a schematic representation, with parts in section and parts removed for clarity, of a portion of the plant in figure 1; and
- figure 3 is a section view, with parts removed for clarity, of a detail of the plant in figure 1;
- figure 4 is a graph showing flow rates related to an embodiment of the present invention;
- figure 5 is a graph showing flow rates related to another embodiment of the present invention;
- figure 6 is a graph showing flow rates related to another different embodiment of the present invention;
- figure 7 is a schematic representation, with parts removed for clarity, of a gas turbine plant for the production of electricity comprising a device for cleaning diesel oil nozzles in accordance with a further embodiment of the present invention; and
- figure 8 is a schematic representation, with parts in section and parts removed for clarity, of a portion of the plant in figure 7.

### BEST MODE FOR CARRYING OUT THE INVENTION

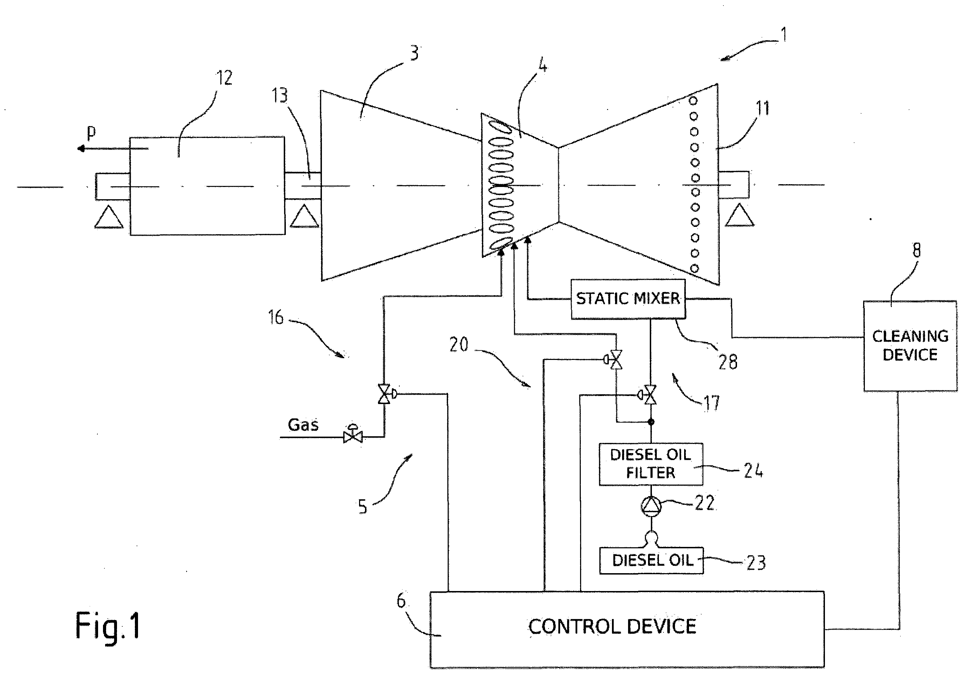

Figure 1 shows a gas turbine plant 1 for production of electricity comprising a compressor 3, a combustion chamber 4, a supply circuit 5 of the combustion chamber 4, a control device 6, a cleaning and cooling device 8 and a turbine 11, which supplies a generator 12, mounted on the same shaft 13 of the turbine 11 and adapted to generate a power P.

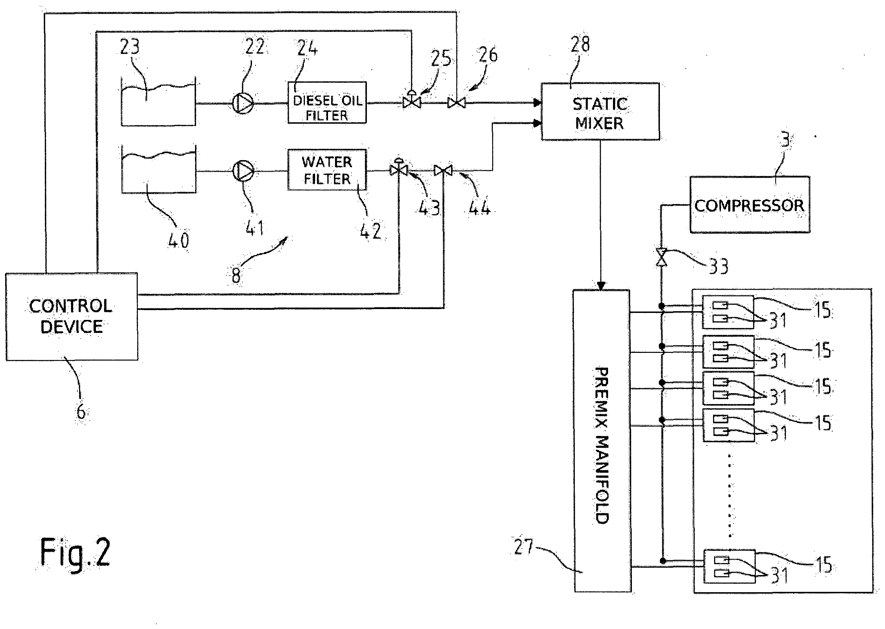

The combustion chamber 4 may be selectively supplied either with gas, in a gas supply mode, or with diesel oil, in a diffusion diesel- oil supply mode and in a premix diesel oil supply mode. In particular, the combustion chamber 4 comprises a plurality of burners 15 (shown in figure 2), which are supplied by the supply circuit 5 and face towards the inside of the combustion chamber 4. There are twenty-four burners 15 in the non-limiting example here described and illustrated.

The supply circuit 5 comprises a gas supply circuit 16 and a diesel oil supply circuit 17.

Specifically, the diesel oil supply circuit 17 comprises a diffusion supply line 19, a premix supply line 20, a supply pump 22 and a fuel reserve 23.

The supply pump 22 sucks the diesel oil from the fuel reserve 23 and supplies it to the diffusion supply line 19 and to the premix supply line 20 thorough a diesel oil filter 24.

Also referring to figure 2, the premix supply line 20 comprises an adjustment valve 25, a stop valve 26, and a premix diesel oil manifold 27, connected to the burners 15.

As will be explained later, the cleaning and cooling device 8 supplies water to the combustion chamber 4 for cleaning and cooling the burners 15. For this purpose, the cleaning and cooling device 8 and the premix supply line 20 are connected to corresponding static mixing inlets 28, the outlet of which supplies the manifold 27.

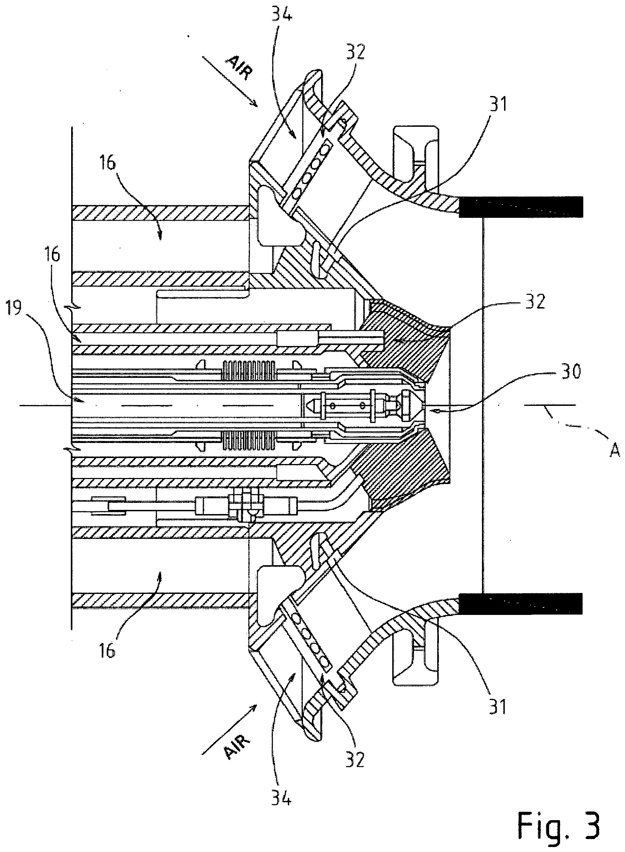

With reference to figure 3, each burner 15 extends along an axis A and comprises a diffusion nozzle 30 essentially arranged along the axis A in communication with the diffusion gas supply line 19 (partially shown in figure 3), a plurality of premix nozzles 31 (only two of which are shown in figure 3) arranged about axis A in communication with the premix supply line 20 (not shown in figure 3) and a plurality of gas nozzles 32 in communication with the gas supply circuit 16 (partially shown in figure 3). There are twenty premix nozzles in the non-limiting example here described and illustrated.

Each burner 15 is supplied with fuel (gas or diesel oil) and with compressed air from the compressor 3 through an air supply valve 33 (figures 1 and 2). Specifically, the compressed air from the compressor 3 is supplied to each burner 15 through an annular pipe 34 which extends about the diffusion nozzle 30. The premix nozzles 31 communicate directly with the annular pipe 34, so that the diesel oil injected into the annular pipe 34 is mixed with the compressed air before being burnt.

The cleaning and cooling device 8 comprises a water reserve 40 at a given temperature, preferably at ambient temperature, a high-pressure pump 41, a water filter 42, an adjustment valve 43 and a stop valve 44.

The cleaning and cooling device 8 is activated by the stop valve 44, whereby the water flows in the fuel supply direction, i.e. from the water reserve 40 to the combustion chamber 4, through the water filter 42, the adjustment valve 43, the stop valve 44 and the static mixer 28. The opening of the stop valve 44 may be controlled either manually or by the control device 6 (as shown in figure 2).

The water filter 42 is structured so as to remove possible solid particles and impurities which could obstruct the premix nozzles 31 from the water flow supplied by the pump 41.

The water flow rate supplied by the cleaning and cooling device 8 is adjusted by the adjustment valve 43, also in this case either manually or under the control of the control device 6 (as shown in figure 2). The temperature of the water must be such that it determines an appropriate cooling of the premix nozzles 31 so as to prevent the overheating of the fuel to be subsequently supplied to the premix nozzles 31. In fact, the premix nozzles 31 face the combustion chamber 4 and are lapped by the hot air from the compressor 3.

The nozzles can be cleaned during various steps of the operation of the plant 1, and specifically immediately after switching from the premix diesel oil operating mode to a different operating mode. Cleaning by means of pressurized water removes possible diesel oil residues from the premix supply line 20 and prevents the formation of solid deposits which could otherwise obstruct the premix nozzles 31 during later operation. After the cleaning step, the premix line 20 is thus free from diesel oil.

In premix diesel oil operating mode, the premix nozzles 31 are initially cooled with an air flow from the compressor 3. The air supply valve 33 is then closed, while the stop valve 44 of the cleaning and cooling device 8 is opened. The pump 41 is started by the control device 6 and a pressurized water flow rate Q_{A} is provided, which passes through the static mixer 28 and along the final segment of the premix supply line 20, reaching the combustion chamber 4 through the premix nozzles 31.

Once the cooling step is over, the plant is brought to premix diesel oil supply mode.

During a transient step of activating the diesel oil supply mode, the cleaning and cooling device 8 continues to supply the pressurized water flow rate Q_{A} to the premix nozzles 31 through the static mixer 28 and the final segment of the premix supply line 20. The water flow rate Q_{A}, considering in this case also the end part of the cleaning step, is supplied for an cooling time interval I_{C} sufficient to guarantee a temperature T of the premix nozzles 31 lower than a threshold, for example 100°C.

The stop valve 26 of the premix supply line 20 in this step is closed, and therefore the premix nozzles 31 still do not receive diesel oil.

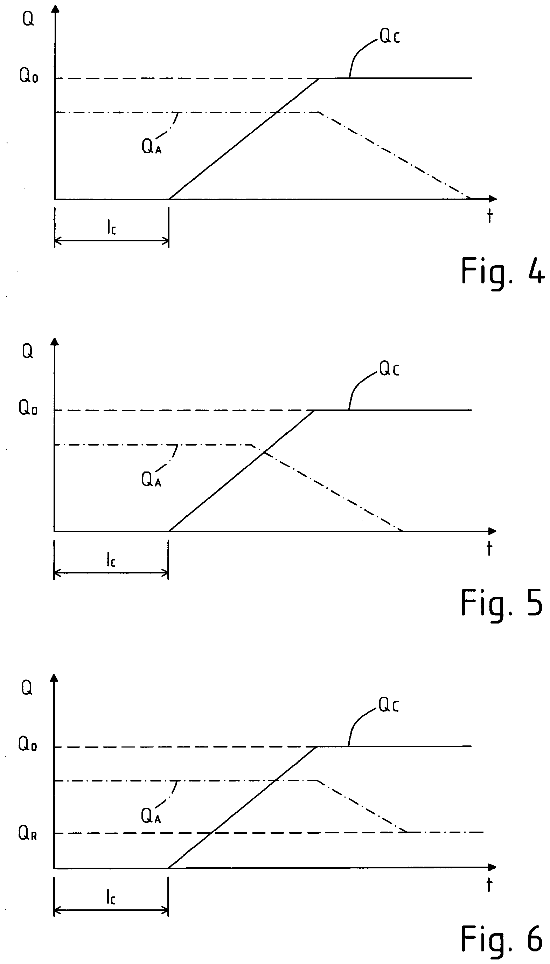

After the cooling time interval I_{C} has expired, the stop valve 26 is opened and the adjustment valve 25 is actuated by the control device 6 so as to gradually introduce a diesel oil flow rate Q_{C}, which is added to the water flow rate Q_{A}. The diesel oil flow rate Q_{C} is increased until a target flow rate Q₀ is reached, which must be supplied at full rate in premix diesel oil supply mode and is defined by the control device 6 according to a control method (see figure 4 with this regard, in which the water flow rate QA is shown by a dash-and-dotted line and the diesel oil flow rate QC is shown by a solid line) . The diesel oil flow rate Q_{C} is mixed in the static mixer 28 with the water flow rate Q_{A} from the cleaning and cooling device 8.

When the target flow rate Q₀ is reached, the control device 6 acts on the adjustment valve 43 of the cleaning and cooling device 8 so as to progressively reduce the water flow rate Q_{A}, until it is eliminated.

However in an embodiment (figure 6), only a portion of the water flow rate Q_{A} is removed, while a residual water flow rate Q_{R} is continuously supplied also during the premix diesel oil supply mode activation transient, in order to contain polluting emissions, specifically nitrogen oxides (NOx).

In another embodiment (figure 5), the control device 6 starts reducing the cooling water flow rate when the diesel oil flow rate reaches a threshold percentage of the target flow rate Q₀. For example, the threshold percentage is 75% of the target flow rate Q₀.

The cooling water flow rate Q_{A} supplied before starting to supply diesel oil allows to maintain the premix nozzles 31 at a relatively low temperature, in order to avoid the formation of solid carbonous deposits. Once the diesel oil flow rate is sufficiently high, the water flow rate may be either reduced or eliminated, because the diesel oil flow rate itself is capable of guaranteeing the cooling of the premix nozzles 31.

Coking and cracking, favoured by the high temperatures, are thus essentially eliminated.

In an embodiment which is not part of the present invention, the cooling and cleaning device 8 is activated during the passage from the diffusion diesel oil supply mode to the premix diesel oil supply mode.

The transition from the diffusion diesel oil supply mode to the premix diesel oil supply mode further contemplates that the premix supply line 20 is gradually activated.

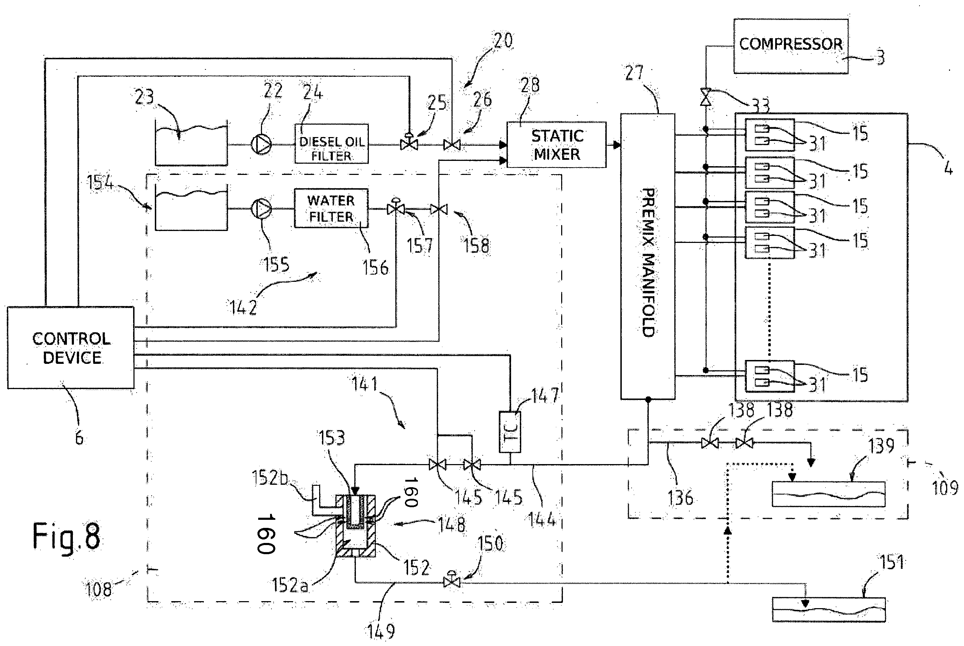

Specifically, after the cleaning cycle carried out by the air cleaning circuit 141 (see fig. 8) and after the cooling cycle carried out by the cooling circuit 142 (see fig. 8), the transition from the diffusion diesel oil supply mode to the premix diesel oil supply mode is carried out by gradually closing the adjustment valve 157 (see fig. 8) of the water cooling circuit 142 and gradually opening the adjustment valve 25 of the premix supply line 20 (with the stop valve 26 open), so as to generate an overlap of the cooling water flow rate and the diesel oil flow rate.

This procedure allows to gradually switch from a 100% water flow supply to a 100% diesel oil flow supply. This gradual transition ensures that the diesel oil does not come into contact with excessively hot surfaces, thus avoiding the onset of undesired deposit formation in the premix nozzles 31 and in the manifold 27.

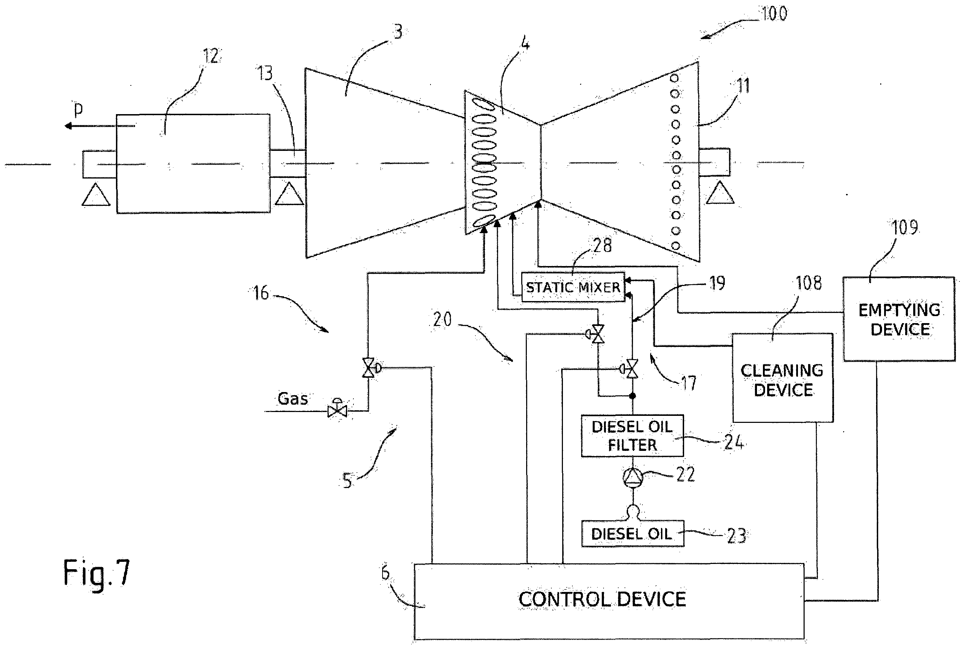

Figures 7 and 8 show a different embodiment of the invention, in which the parts equivalent to those previously described are indicated with the same reference numbers.

In this case, a gas turbine plant 100 for the production of electricity comprises the compressor 3, the combustion chamber 4, the supply circuit 5, the combustion chamber 4, the control device 6, a cleaning device 108, an emptying device 109 and the turbine 11, which supplies the generator 12.

With reference to figure 8, the emptying device 109 comprises an emptying pipe 136, two stop valves 138 and a tank 139 for collecting the waste fuel. The emptying device 109 is activated after combustion is stopped to evacuate the residual fuel from the manifold 27. Specifically, the activation of the emptying device 109 consists of the manual opening of the stop valves 138. A variant not shown contemplates that the opening of the stop valves 138 is controlled by the control device 6. The opening of the stop valves 138 determines the emptying by gravity of residual fuel from the manifold 127 and the premix nozzles 131 and the collection of such fuel in the tank 139.

The device 108 comprises an air cleaning circuit 141 and a water cooling circuit 142.

The air cleaning circuit 141 comprises a high-pressure pipe 144 in communication with the manifold 27, two stop valves 145 arranged along the high-pressure pipe 144, a thermocouple 147 arranged between the manifold 27 and the two stop valves 145, a separator device 148 arranged downstream of the stop valves 145, a low-pressure pipe 149, an exhaust valve 150 and a tank 151.

The stop valves 145 are controlled by the control device 6.

The thermocouple 147 detects the temperature in the high-pressure pipe 144 upstream of the stop valves 145. The detected temperature value is monitored in order to avoid an excessive overheating of the high-pressure pipe 144. Preferably, such temperature value is supplied to the control device 6, which provides the activation of possible safety devices and measures (not shown).

The separator device 148 comprises a hollow main body 152, which defines an expansion chamber 152a having a pressure lower than the pressure present in the combustion chamber 4, while the combustion process is in progress. The pressure in the combustion chamber, while the combustion process is in progress, usually oscillates approximately about 16-17 bars.

In particular, the pressure in the expansion chamber 152a must have a value so as to determine, when the premix supply line 20 is not engaged by the diesel oil, a pressure drop between the combustion chamber 4 and the expansion chamber 152a sufficient to generate an air back flow capable of determining the detachment of the solid deposits from the premix nozzles 31 and conveying such deposits, and possible liquid deposits, such as for example diesel oil and water, to the expansion chamber 152a. Hereinafter, the expression "air back flow" is the air flow which flows from the combustion chamber 4 to the expansion chamber 152a in direction opposite to the normal fuel flow.

The air back flow mainly consists of hot air from the compressor 3, which flows in the annular pipe 34 of the burners 15.

In the case in point of the non-limiting example here described and illustrated, the pressure in the expansion chamber 152a is such that it determines a pressure drop between the combustion chamber 4 and the expansion chamber 152a equal to at least approximately 2-3 bars, preferably equal to approximately 15 bars.

In the example here described and illustrated, the separator device 148 comprises an inlet pipe 153, which is arranged inside the main body 152 and is in communication with the high-pressure pipe 144 and with the expansion chamber 152a. Specifically, the inlet pipe 153 presents a cylindrical shape and comprises a plurality of side openings 160 for putting the inlet pipe 153 into communication with the expansion chamber 152a. The expansion chamber 152a is fluidly connected to the external environment through an exhaust pipe 152b and has a pressure essentially equal to atmospheric pressure. In particular, the exhaust pipe 152b is arranged at a position higher than the position at which the side openings 160 of the inlet pipe 153 are arranged.

The separator device 148 is adapted to receive a flow, comprising the air back flow and the materials transported by the air back flow, and to separate an aeriform portion from a non-aeriform portion of the inlet flow.

The aeriform portion is discharged into the external environment thought the exhaust pipe 152b, while the non-aeriform portion is conveyed into the tank 151 in a controlled manner through the exhaust valve 150 arranged along the low-pressure pipe 149.

According to a variant shown by a dash-and-dotted line, the non-aeriform portion is collected in the tank 139 of the emptying device 109, instead of in the tank 151.

The control device 6 activates the air cleaning circuit 141 by opening the stop valves 145 when the premix supply line 20 is not engaged by diesel oil.

The air cleaning circuit 141 is activated between passing from diffusion diesel oil supply mode to premix diesel oil supply mode in order to clean the premix nozzles 31 and guarantee the correct operation thereof. In particular, the air cleaning circuit 141 is activated while diesel oil is supplied to the combustion chamber 4 through the diffusion nozzles 30.

Furthermore, the air cleaning circuit 141 may be periodically activated during the gas supply mode to maintain clean the premix nozzles 31, often subject to obstruction. Specifically, the air cleaning circuit 141 is activated while supplying gas to the combustion chamber 4 through the gas nozzles 32.

The water cooling circuit 142 comprises a water reserve 154 at a given temperature, preferably at ambient temperature, a high-pressure pump 155, a water filter 156, an adjustment valve 157 and a stop valve 158.

The water cooling circuit 142 is connected to an end segment of the premix diesel oil supply circuit 20 through the static mixer 28. The cleaning and cooling device 8 is activated by the control device 6. Water flows in the fuel supply direction, i.e. from the water reserve 154 to the combustion chamber 4, through the water filter 156, the adjustment valve 157, the stop valve 158 and the static mixer 28. The opening of the stop valve 158 may be controlled either manually or by the control device 6 (as shown in figure 2).

The water cooling circuit 142 is used in a transient step of activating the diesel oil supply mode, at the end of the cleaning cycle carried out by the air cleaning circuit 141. In this manner, the premix nozzles 31, just crossed by the hot air back flow, are cooled in order to prevent the formation of solid carbonous deposits. As previously described, initially a pressurized water flow rate Q_{A} is exclusively supplied for an interval of cooling time I_{C}, so as to lower the temperature of the premix nozzles 31 under a threshold. Thus, the control device 6 acts on the adjustment valve 25 and on the stop valve 26 of the premix supply line 20 to supply a gradually increasing diesel oil flow rate Q_{C}. When a target flow rate Q₀ is reached, the control device 6 intervenes on the adjustment valve to gradually reduce the cooling water flow rate Q_{A}.

Advantageously, the device 8 for cleaning diesel oil nozzles according to the present invention allows to carry out the transition from a gas supply to a diesel oil supply in a rapid, safe and effective manner without requiring the suspension of the combustion reaction inside the combustion chamber 4.

Furthermore, the expansion chamber 152a into which the high-temperature air back flow leads (at least approximately 16 bars), contributes towards rapidly cooling the air back flow and, at the same time, towards considerably reducing the pressure thereof. In this manner, it is eliminated the severe risk that the liquid deposits conveyed by the air back flow, which often contain residual diesel oil, could catch fire inside the expansion chamber 152a, where diesel oil and air flow come into contact.

Advantageously, the device 108 according to the present invention may also be installed in existing plants, and not only in newly constructed plants.

The installation of the device 108 in newly constructed plants is extremely advantageous because the air cleaning circuit 141, if appropriately designed so as not to present subsequent circuit portions arranged at increasing heights, may also act as an emptying device. Indeed, at the end of combustion, the opening of the stop valves 145 determines the collection by effect of gravity in the expansion chamber 152a, and subsequently into the tank 151, of the residual fuel present in the manifold 27 and in the premix nozzles 31.

## Claims

1. A method for supplying a gas turbine plant, comprising the steps of:
supplying a gas to gas nozzles (32) of a combustion chamber (4) of the gas turbine (11);
supplying a liquid fuel to premix nozzles (31) of the gas turbine (11) through a premix supply line (20); and
switching between the step of supplying a gas and the step of supplying a liquid fuel;
wherein said switching, when switching from gas fuel to liquid fuel, comprises the step of supplying a water flow rate (Q_{A}) to the premix nozzles (31) through the premix supply line (20) for a cooling time (I_{C}) in absence of the liquid fuel, before supplying the liquid fuel;
**characterized in that** said switching further comprises the steps of:
after the expiring of said cooling time (I_{C}) adding a liquid fuel flow (Q_{C}) to the water flow rate (Q_{A}) ; and
removing at least a portion of the water flow rate (Q_{A}), while the liquid fuel flow (Q_{A}) continues to be supplied.

2. A method according to claim 1, wherein the step of adding comprises gradually increasing the liquid fuel flow rate (Q_{C}).

3. A method according to claim 1 or 2, wherein the step of removing comprises gradually reducing the water flow rate (Q_{A}).

4. A method according to any of the preceding claims, wherein the step of removing is carried out when the liquid fuel flow rate (Q_{C}) has reached a target flow rate (Q₀).

5. A method according to any of the claims from 1 to 3, wherein the step of removing is carried out when the liquid fuel flow rate (Q_{C}) has reached a threshold percentage of a target flow rate (Q₀).

6. A method according to any of the claims from 1 to 5, wherein the step of removing comprises eliminating the water flow rate (Q_{A}).

7. A method according to any of the preceding claims, wherein the step of removing comprises maintaining a residual water flow rate (Q_{R}).

8. A method according to any of the preceding claims, wherein the cooling time (I_{C}) is such that the flow rate (Q_{A}) reduces a temperature of the premix nozzles (31) under a temperature threshold.

9. A method according to any of the preceding claims, comprising the step of cleaning the premix nozzles (31) before the step of supplying a liquid fuel to the premix nozzles (31).

10. A method according to claim 9, wherein the step of cleaning the premix nozzles (31) comprises using the water flow rate (Q_{A}).

11. A method according to claim 9, wherein the step of cleaning the premix nozzles (31) comprises using an air back flow from a combustion chamber (4) of the plant (1).

12. A method according to any of the preceding claims, wherein the liquid fuel is diesel oil.

13. A method according to any of the preceding claims, comprising the step of cleaning the premix nozzles (31) through an air back flow, while a combustion process in progress in the combustion chamber (4) .

14. A gas turbine plant, comprising:
a gas turbine (11);
a combustion chamber (4), coupled to the gas turbine (11) and having a plurality of burners (15) provided with corresponding premix nozzles (31);
a gas supply circuit (16), for supplying gas to gas nozzles (32);
a liquid fuel supply circuit (17), having a premix supply line (20) for supplying liquid fuel to the premix nozzles (31);
a cooling device (8; 108), for supplying a water flow rate (Q_{A}) to the premix nozzles (31) through the premix supply line (20);
control means (6, 25, 26, 43, 44; 6, 25, 26, 157, 158), for selectively activating the gas supply circuit (16) and the liquid fuel supply circuit (17);
wherein the control means are configured to control the liquid fuel supply circuit (17) and the cooling device (8; 108) so as to supply a water flow rate (Q_{A}) to the premix nozzles (31) through the premix supply line (20) for a cooling time (I_{C}) in absence of the liquid fuel, before activating the liquid fuel supply circuit (17) when switching from gas fuel to liquid fuel, **characterized in that** the control means are further configured to control the liquid fuel supply circuit (17) and the cooling device (8; 108) so as to activate the liquid fuel supply circuit (17) after the expiring of said cooling time (I_{C}), while the cooling device (8; 108) supplies the water flow rate (Q_{A}) and so as to remove at least one portion of the water flow rate (Q_{A}), while the liquid fuel flow rate (Q_{A}) continues to be supplied.

## Patentansprüche

1. Verfahren zur Versorgung einer Gasturbinenanlage, die Schritte umfassend:
Zuführen eines Gases zu Gasdüsen (32) einer Brennkammer (4) der Gasturbine (11);
Zuführen eines Flüssigbrennstoffs zu Vormischdüsen (31) der Gasturbine (11) über eine Vormischzufuhrleitung (20); und
Umschalten zwischen dem Schritt des Zuführens eines Gases und dem Schritt des Zuführens eines Flüssigbrennstoffs;
wobei das Umschalten dann, wenn von Gasbrennstoff auf Flüssigbrennstoff umgeschaltet wird, den Schritt des Zuführens eines Wasserdurchflusses (Q_{A}) zu den Vormischdüsen (31) durch die Vormischzufuhrleitung (20) für eine Kühlungszeit (I_{C}) in Abwesenheit des Flüssigbrennstoffs, bevor der Flüssigbrennstoff zugeführt wird, umfasst;
**dadurch gekennzeichnet, dass** das Umschalten ferner die Schritte umfasst:
nach Ablauf der Kühlungszeit (I_{C}), Hinzufügen eines Flüssigbrennstoffdurchflusses (Q_{C}) zum Wasserdurchfluss (Q_{A}) ; und
Wegnehmen wenigstens eines Teils des Wasserdurchflusses (Q_{A}), während der Flüssigbrennstoffdurchfluss (Q_{A}) weiterhin zugeführt wird.

2. Verfahren nach Anspruch 1, wobei der Schritt des Hinzufügens das allmähliche Erhöhen des Flüssigbrennstoffdurchflusses (Q_{C}) umfasst.

3. Verfahren nach Anspruch 1 oder 2, worin der Schritt des Wegnehmens das allmähliche Reduzieren des Wasserdurchflusses (Q_{A}) umfasst.

4. Verfahren nach einem der vorhergehenden Ansprüche, wobei der Schritt des Wegnehmens durchgeführt wird, wenn der Flüssigbrennstoffdurchfluss (Q_{C}) einen Soll-Durchfluss (Q₀) erreicht hat.

5. Verfahren nach einem der Ansprüche von 1 bis 3, wobei der Schritt des Wegnehmens durchgeführt wird, wenn der Flüssigbrennstoffdurchfluss (Q_{C}) einen Schwellenprozentsatz eines Soll-Durchflusses (Q₀) erreicht hat.

6. Verfahren nach einem der Ansprüche von 1 bis 5, wobei der Schritt des Wegnehmens das Unterbinden des Wasserdurchflusses (Q_{A}) umfasst.

7. Verfahren nach einem der vorhergehenden Ansprüche, wobei der Schritt des Wegnehmens das Beibehalten eines Restwasserdurchflusses (Q_{R}) umfasst.

8. Verfahren nach einem der vorhergehenden Ansprüche, wobei die Kühlungszeit (I_{C}) so bemessen ist, dass der Durchfluss (Q_{A}) eine Temperatur der Vormischdüsen (31) unter einen Temperaturschwellenwert senkt.

9. Verfahren nach einem der vorhergehenden Ansprüche, den Schritt des Reinigens der Vormischdüsen (31) vor dem Schritt des Zuführens eines Flüssigbrennstoffs zu den Vormischdüsen (31) umfassend.

10. Verfahren nach Anspruch 9, wobei der Schritt des Reinigens der Vormischdüsen (31) die Verwendung des Wasserdurchflusses (Q_{A}) umfasst.

11. Verfahren nach Anspruch 9, wobei der Schritt des Reinigens der Vormischdüsen (31) die Verwendung eines Luftrückstroms aus einer Brennkammer (4) der Anlage (1) umfasst.

12. Verfahren nach einem der vorhergehenden Ansprüche, wobei der Flüssigbrennstoff Dieselöl ist.

13. Verfahren nach einem der vorhergehenden Ansprüche, den Schritt des Reinigens der Vormischdüsen (31) durch einen Luftrückstrom während eines laufenden Verbrennungsprozesses in der Brennkammer (4) umfassend.

14. Gasturbinenanlage, umfassend:
eine Gasturbine (11);
eine Brennkammer (4), die mit der Gasturbine (11) gekoppelt ist und mehrere Brenner (15) aufweist, die mit entsprechenden Vormischdüsen (31) versehen sind;
eine Gas-Zufuhrschaltung (16) zum Zuführen von Gas zu Gasdüsen (32);
eine Flüssigbrennstoff-Zufuhrschaltung (17) mit einer Vormischzufuhrleitung (20) zum Zuführen von Flüssigbrennstoff zu den Vormischdüsen (31);
eine Kühlvorrichtung (8; 108) zum Zuführen eines Wasserdurchflusses (QA) zu den Vormischdüsen (31) durch die Vormischzufuhrleitung (20);
Steuerungsmittel (6, 25, 26, 43, 44; 6, 25, 26, 157, 158) zum selektiven Aktivieren der Gas-Zufuhrschaltung (16) und der Flüssigbrennstoff-Zufuhrschaltung (17);
wobei die Steuerungsmittel dafür konfiguriert sind, die Flüssigbrennstoff-Zufuhrschaltung (17) und die Kühlvorrichtung (8; 108) so zu steuern, dass den Vormischdüsen (31) in Abwesenheit des Flüssigbrennstoffs für eine Kühlungszeit (I_{C}) durch die Vormischzufuhrleitung (20) ein Wasserdurchfluss (Q_{A}) zugeführt wird, bevor beim Umschalten von Gasbrennstoff auf Flüssigbrennstoff die Flüssigbrennstoff-Zufuhrschaltung (17) aktiviert wird,
**dadurch gekennzeichnet, dass** die Steuerungsmittel ferner dafür konfiguriert sind, die Flüssigbrennstoff-Zufuhrschaltung (17) und die Kühlvorrichtung (8; 108) so zu steuern, dass die Flüssigbrennstoff-Zufuhrschaltung (17) nach Ablauf der Kühlungszeit (I_{C}) aktiviert wird, während die Kühlvorrichtung (8; 108) den Wasserdurchfluss (Q_{A}) zuführt, und mindestens ein Teil des Wasserdurchflusses (Q_{A}) weggenommen wird, während der Flüssigbrennstoffdurchfluss (Q_{A}) weiterhin zugeführt wird.

## Revendications

1. Procédé d'approvisionnement d'une installation de turbine à gaz, comprenant les étapes suivantes :
fournir un gaz aux buses de gaz (32) d'une chambre de combustion (4) de la turbine à gaz (11) ;
fournir un combustible liquide aux buses de prémélange (31) de la turbine à gaz (11) à travers une canalisation de fourniture de prémélange (20) ; et
commuter entre l'étape de fourniture d'un gaz et l'étape de fourniture d'un combustible liquide ;
où ladite étape de commutation, lors de la commutation du combustible gazeux au combustible liquide, comprend l'étape consistant à fournir un débit d'eau (Q_{A}) aux buses de prémélange (31) à travers la canalisation de fourniture de prémélange (20) pendant un temps de refroidissement (I_{C}) en l'absence de combustible liquide, avant de fournir le combustible liquide ;
**caractérisé en ce que** ladite étape de commutation comprend en outre les étapes suivantes :
ajouter, après l'expiration dudit temps de refroidissement (I_{C}), un flux de combustible liquide (Q_{C}) au débit d'eau (Q_{A}) ; et
retirer une partie au moins du débit d'eau (Q_{A}), alors que l'on continue de fournir le flux de combustible liquide (Q_{A}).

2. Procédé selon la revendication 1, où l'étape d'ajout comprend une étape consistant à augmenter progressivement le débit de combustible liquide (Q_{C}).

3. Procédé selon la revendication 1 ou 2, où l'étape de retrait comprend une étape consistant à réduire progressivement le débit d'eau (Q_{A}).

4. Procédé selon l'une quelconque des revendications précédentes, où l'étape de retrait est exécutée lorsque le débit de combustible liquide (Q_{C}) a atteint un débit cible (Q₀).

5. Procédé selon l'une quelconque des revendications 1 à 3, où l'étape de retrait est exécutée lorsque le débit de combustible liquide (Q_{C}) a atteint un pourcentage seuil d'un débit cible (Q₀).

6. Procédé selon l'une quelconque des revendications 1 à 5, où l'étape de retrait comprend une étape consistant à supprimer le débit d'eau (Q_{A}).

7. Procédé selon l'une quelconque des revendications précédentes, où l'étape de retrait comprend une étape consistant à maintenir un débit d'eau résiduel (Q_{R}).

8. Procédé selon l'une quelconque des revendications précédentes, où le temps de refroidissement (I_{C}) est tel que le débit (Q_{A}) réduit la température des buses de prémélange (31) sous un seuil de température.

9. Procédé selon l'une quelconque des revendications précédentes, comprenant l'étape de nettoyage des buses de prémélange (31) avant l'étape de fourniture d'un combustible liquide aux buses de prémélange (31).

10. Procédé selon la revendication 9, où l'étape de nettoyage des buses de prémélange (31), comprend l'utilisation du débit d'eau (Q_{A}).

11. Procédé selon la revendication 9, où l'étape de nettoyage des buses de prémélange (31) comprend l'utilisation d'un flux de retour d'air provenant d'une chambre de combustion (4) de l'installation (1).

12. Procédé selon l'une quelconque des revendications précédentes, où le combustible liquide est un combustible diesel.

13. Procédé selon l'une quelconque des revendications précédentes, comprenant l'étape de nettoyage des buses de prémélange (31) par un flux de retour d'air, tandis qu'un processus de combustion est en cours dans la chambre de combustion (4).

14. Installation de turbine à gaz, comprenant :
une turbine à gaz (11) ;
une chambre de combustion (4), accouplée à la turbine à gaz (11), et présentant une pluralité de brûleurs (15) dotés de buses de prémélange correspondantes (31) ;
un circuit de fourniture de gaz (16), destiné à fournir le gaz aux buses de gaz (32) ;
un circuit de fourniture de combustible liquide (17), présentant une canalisation de fourniture de prémélange (20) destinée à fournir le combustible liquide aux buses de prémélange (31) ;
un dispositif de refroidissement (8 ; 108), destiné à fournir un débit d'eau (Q_{A}) aux buses de prémélange (31) à travers la canalisation de fourniture de prémélange (20) ;
des moyens de commande (6, 25, 26, 43, 44; 6, 25, 26, 157, 158), destinés à actionner sélectivement le circuit de fourniture de gaz (16) et le circuit de fourniture de combustible liquide (17) ;
où les moyens de commande sont configurés pour commander le circuit de fourniture de combustible liquide (17) et le dispositif de refroidissement (8 ; 108) afin de fournir un débit d'eau (Q_{A}) aux buses de prémélange (31) à travers la canalisation de fourniture de prémélange (20) pendant un temps de refroidissement (I_{C}) en l'absence de combustible liquide, avant d'actionner le circuit de fourniture de combustible liquide (17) lors d'une commutation du combustible gazeux au combustible liquide, **caractérisé en ce que** les moyens de commande sont configurés en outre pour commander le circuit de fourniture de combustible liquide (17) et le dispositif de refroidissement (8 ; 108) afin d'actionner le circuit de fourniture de combustible liquide (17) après l'expiration dudit temps de refroidissement (I_{C}), tandis que le dispositif de refroidissement (8 ; 108) fournit le débit d'eau (Q_{A}), et afin de retirer une partie au moins du débit d'eau (Q_{A}), tandis que l'on continue de fournir le débit de combustible liquide (Q_{C}).
